# EUROPEAN PATENT SPECIFICATION

(11) **EP 2 452 855 B1**
(45) Date of publication and mention of the grant of the patent: **19.12.2012**
(21) Application number: 10190609.7
(22) Date of filing: 10.11.2010
(51) Int. Cl.: B60R 7/08, B42D 5/00

(54) **A note holder mechanism**
Notenhaltemechanismus
Mécanisme de support de billets

(43) Date of publication of application: 16.05.2012
(73) Proprietor: Tofas Turk Otomobil Fabrikasi Anonim Sirketi, 16369 Bursa (TR)
(72) Inventor: Ayarturk, Hasan, 16369, Bursa (TR)
(74) Representative: Dericioglu, Ekin

(56) References cited:
- WO-A1-95/00360
- US-A- 2 749 430

## Description

The present invention relates to a note holder mechanism in which the objects like paper etc, on which notes are taken, are placed.

### Background of the Invention

When it is wanted to take notes on objects such as paper etc., these objects are required to be placed on a hard surface and various mechanisms are used for this purpose.

In situations which require that the user takes note in vehicles, lack of space and not being able to put the paper, on which the note is taken, on any support make difficult to take note. The lower side of the part, which the note is taken, cannot be upheld because of the lack of space used in the mechanisms which are present in the state of the art and provide taking note.

International Patent document no. W09500360, an application in the state of the art, discloses a device that holds the notepad, used in the vehicles, on it. The device having a body fixed on the central console or the armrest has the feature to be locked in open and closed positions.

The Great Britain patent document no. GB2214884, an application in the state of the art, discloses a car accessory which holds the notebook and the money.

The United States patent document no. US2007000959, an application in the state of the art, discloses an expandable writing panel which is used in vehicles.

### Summary of the Invention

The objective of the present invention is to realize a note holder mechanism which provides taking notes even during travelling.

A further objective of the present invention is to realize a note holder mechanism that is prevented from making noise by vibrating when not in use.

### Detailed Description of the Invention

A note holder mechanism realized to fulfill the objectives of the present invention is illustrated in the accompanying figures, in which:

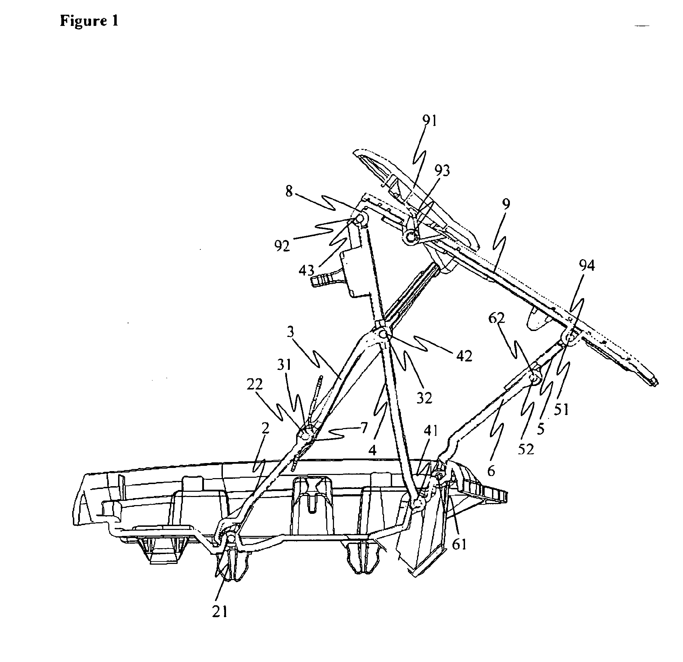

Figure 1 is the side view of the open state of the inventive note holder mechanism.

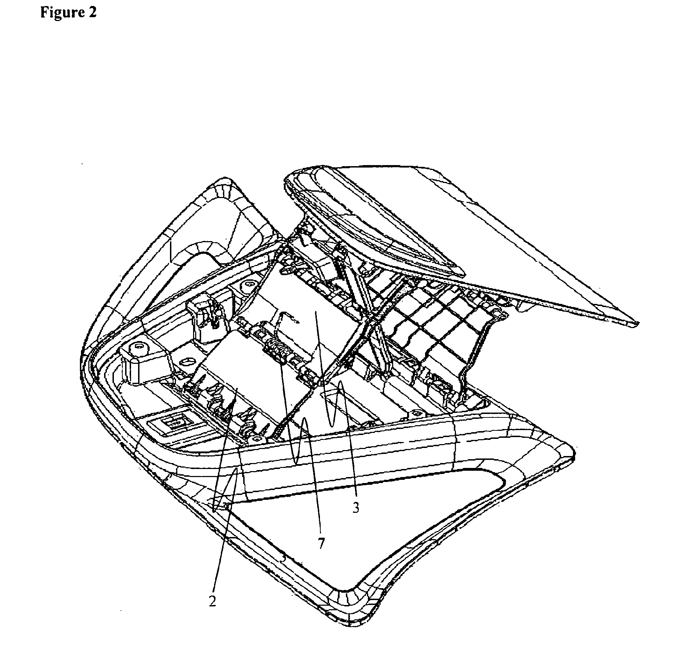

Figure 2 is the perspective view of the open state of the inventive note holder mechanism.

The components seen in the figure are individually numbered where the numbers refer to the following:
1. Note Holder Mechanism
2. first link
   21. Connection slot
   22. Connection slot
3. Second link
   31. Connection slot
   32. Connection slot
   33. Connection slot
4. Third link
   41. Connection slot
   42. Connection slot
   43. Connection slot
5. Fourth link
   51. Connection slot
   52. Connection slot
6. Fifth link
   61. Connection slot
   62. Connection slot
7. Spring
8. Spring
9. Support piece
   91. Clip
   92. Connection slot
   93. Connection slot
   94. Connection slot

### A. Vehicle (A)

The automobile, truck, table etc., to which the note holder (1) is connected, will be referred as vehicle (A) hereinafter in the description.

The connection slots (21, 22, 31, 32, 33, 41, 42, 43, 51, 52, 61, 62, 92, 93, 94) are connected to each other through the pins which pass through them, thus the links (2, 3, 4, 5, 6) and the support piece (9) can move by rotating around these pins.

The inventive note holder (1) comprises
at least one first and at least one fifth links (2, 6) each end of which are connected to the vehicle (A),
at least one support piece (9) on which the materials such as paper etc. are placed on it,
at least one third link (4) one end of which is connected to the vehicle and the other end is connected to the support piece,
at least one second link (3) one end of which is connected to the first link (2) and the other end is connected to the support piece (9),
at least one fourth link (5) one end of which is connected to the fifth link (6) and the other end is connected to the support piece (9),
at least one clip (91) which holds the materials by being placed on the support piece (9).

The links (2, 3, 4, 5, 6) located within the note holder mechanism (1) are connected to each other via pins and they can move by rotating around these pins' axis.

There are connection slots (21, 22) at both ends of the first link (2) and the first link (2) is connected to the vehicle (A) via the connection slot (21).

There are connection slots (31, 32, 33) at both ends of the second link (3) and in the area between its two ends, and the second link (3) is connected to the connection slot (22) of the first link (31) via the connection slot (31).

There are connection slots (92, 93, 94) at both ends of the support piece (9) and in the area between these two ends, and the support piece (9) is connected to the connection slot (33) located on the second link (3) via the connection slot (93).

There are connection slots (41, 42, 43) at both ends of the third link (4) and in the area between its two ends, the connection slot (41) at one end of the third link (4) is connected to the vehicle (A), the connection slot (43) is connected to the connection slot (92) which the support piece (9) has, the connection slot (42) is connected to the connection slot (32) of the second link (3).

In the preferred embodiment of the invention, the note holder mechanism (1) comprises at least one spring (7) which is located between the first link (2) and the second link (3) and applies force on these two links (2, 3) such that it will move them (2, 3) apart from each other.

In the preferred embodiment of the invention, the note holder mechanism (1) comprises at least one spring (8) which is located between the third link (4) and the support piece (9) and applies force on these parts (4, 9) such that it will move them (4, 9) apart from each other.

There are connection slots (51, 52) at both ends of the fourth link (5), the connection slot (51) of the fourth link (5) is connected to the connection slot (94) of the support piece (9).

The connection slot (62) at one end of the fifth link (6) is connected to the connection slot (52) of the fourth link (5), the connection slot (61) at the other end is connected to the vehicle (A).

In the preferred embodiment of the invention, the fourth link (5) has a protrusion, vertical to the protrusion which the fifth link (6) has, at its end which is connected to the vehicle (A).

The note holder (1) has two stable states, namely closed and open. The first link (2) and the second link (3) are on the same direction when the note holder (1) is in open position. The fourth link (5) and the fifth link (6) are in the same direction with each other and parallel to the direction which the first and the second links (2, 3) are located in. When the note holder mechanism (1) is in open position, the protrusion located at fourth link's (5) end, which is not connected to the support piece, contacts the protrusion which the fifth link (6) has, thus it is provided that it is not closed in forces applied on the note holder mechanism (1), smaller than the predetermined threshold value.

In the preferred embodiment of the invention the protrusion, which the fourth link has, is biangular. When the note holder mechanism (1) is in closed position, the protrusion, which the fourth end (5) has, contacts the protrusion, which the fifth link (6) has, and prevents the mechanism (1) from moving. In order to prevent the openings which can stem from the tolerances in production, the protrusions can be covered with an elastic material. Also, elastic materials may be placed such that they will cover the surfaces of the areas which the links or the protrusions contacts each other.

When the note holder mechanism (1) is in open position, the protrusion, which the fourth link (5) has, and the protrusion, which the fifth link (6), contact each other, thus the mechanism (1) is prevented from closing via the small force applied by the user during writing.

A force bigger than the threshold value is applied on the support piece (9) in order that the note holder mechanism (1) passes to a closed position from the open position. With this force, the fourth link (5) makes rotary motion onto the support piece (9) such that it will be parallel to the support piece (9). The first link (2) approaches to the third link (4) by making a clockwise rotary motion around the axis of the connection slot (22) which it is connected to the vehicle. In the meantime, the second link (3) approaches to the first link (2) by making a counter clockwise rotary motion around the axis of the connection slot (31) which it is connected to the first link (2). The third link (4) approaches to the second link (3) by making a scissors motion around the connection slot (42) which it is connected to the second link (3). As a result of this motion, the support piece (9) and the fifth link (6) approach to the third link (4).

Within the scope of this basic concept, it is possible to develop various embodiments of the inventive note holder mechanism (1). The invention can not be limited to the examples described herein; it is essentially according to the claims.

## Claims

1. A note holder mechanism (1) comprising at least one first and at least one fifth links (2, 6) which are connected to a vehicle (A) via pins and can move by rotating around these pins, one end of each of which is connected to the vehicle (A); at least one support piece (9) on which the materials such as paper etc can be placed; at least one second link (3) one end of which is connected to the first link (2) and the other end is connected to the support piece (9); at least one third link (4)one end of which is connected to the vehicle and the other end is connected to the support piece (9), and **characterized by** at least one fourth link (5) one end of which is connected to the fifth link (6) and the other end is connected to the support piece (9).

2. A note holder mechanism (1) according to claim 1, **characterized by** at least one spring (7) which is located between the first link (2) and the second link (3) and applies force on these two links (2, 3) such that it will move them (2, 3) apart from each other.

3. A note holder mechanism (1) according to any of the preceding claims, **characterized by** at least one spring (8) which is located between the third link (4) and the support piece (9) and applies force on these parts (4, 9) such that it will move them (4, 9) apart from each other.

## Patentansprüche

1. Ein Notizenhaltemechanismus (1) umfasst mindestens ein erstes und mindestens ein fünftes Glied (2, 6), die über Stifte an einem Fahrzeug (A) befestigt sind und durch Umdrehen um diese Stifte, deren jeweils ein Ende an das Fahrzeug (A) angeschlossen ist, bewegt werden können; zumindest ein Trägerstück (9), auf das Materialien wie Papier etc. gestellt werden können; zumindest ein zweites Glied (3), dessen ein Ende mit dem ersten Glied (2) und das andere Ende mit dem Trägerstück (9) verbunden ist; zumindest ein drittes Glied (4), dessen ein Ende mit dem Fahrzeug und das andere Ende mit dem Trägerstück (9) verbunden ist und **gekennzeichnet durch** mindestens ein viertes Glied (5), dessen ein Ende mit dem fünften Glied (6) und das andere Ende mit dem Trägerstück (9) verbunden ist.

2. Ein Notizenhaltemechanismus (1) nach Anspruch 1, **gekennzeichnet durch** mindestens eine Feder (7), die zwischen dem ersten Glied (2) und dem zweiten Glied (3) angeordnet ist und auf diese beide Glieder (2, 3) eine Kraft ausübt, so dass diese (2, 3) voneinander getrennt werden.

3. Ein Notizenhaltemechanismus (1) nach einem der vorhergehenden Ansprüchen, **gekennzeichnet durch** mindestens eine Feder (8), die zwischen dem ersten Glied (4) und dem Träger (9) angeordnet ist und auf diese Teile (4, 9) Kraft ausübt, so dass diese (4, 9) voneinander getrennt werden.

## Revendications

1. Un mécanisme de porte-note (1) comportant au moins une premier et au moins une cinquième liaison qui sont reliées à un véhicule (A) par épingles et peuvent tourner en pivotant autour de ces dernières, chacun de ses bouts étant relié au véhicule (A) ; au moins une pièce de support (9) sur laquelle on peut placer des matériaux tels que papier ; au moins une deuxième liaison (3) dont un bout est relié à la première liaison (2) et l'autre bout est relié à la pièce de support (9) ; au moins une troisième liaison (4) dont un bout est relié au véhicule et l'autre bout est relié à la pièce de support (9), et **caractérise par** au moins un quatrième liaison (5) dont un bout est relié à la cinquième liaison (6) et l'autre bout est relié à la pièce de support (9).

2. Un mécanisme de porte-note (1) selon la revendication 1, **caractérisé par** au moins un ressort (7) situé entre la première liaison (2) et la deuxième liaison et appliquant une force sure ces deux liaisons (2, 3) de façon à les éloigner l'une de l'autre (2, 3).

3. Un mécanisme de porte-note (1) selon l'une quelconque des revendications précédentes, **caractérisé par** au moins un ressort (8) situé entre la troisième liaison (4) et la pièce de support (9) et appliquant une force sure ces pièces (4, 9) de façon à les éloigner l'une de l'autre (4, 9).
